# EUROPÄISCHE PATENTSCHRIFT

(11) **EP 1 063 910 B1**
(45) Veröffentlichungstag und Bekanntmachung des Hinweises auf die Patenterteilung: **04.09.2002**
(21) Anmeldenummer: 99902447.4
(22) Anmeldetag: 04.02.1999
(51) Int. Cl.: A47G 19/22, B65D 47/20, F16K 15/14

(54) **BEHÄLTERAUFSATZ FÜR EINEN TRINKBEHÄLTER, VENTILKÖRPEREINSATZ HIERFÜR UND TRINKBEHÄLTER**
CONTAINER CAP FOR DRINK CONTAINERS, VALVE BODY INSERT PROVIDED THEREFOR, AND DRINK CONTAINERS
GARNITURE POUR UN RECIPIENT A BOISSON, ELEMENT DE CORPS DE SOUPAPE ET RECIPIENT A BOISSON CORRESPONDANTS

(30) Priorität: 18.03.1998 AT 47698
(43) Veröffentlichungstag der Anmeldung: 03.01.2001
(73) Patentinhaber: Bamed AG, 8852 Altendorf (CH)
(72) Erfinder: RÖHRIG, Peter, A-1160 Wien (AT)
(74) Vertreter: Weinzinger, Arnulf, Dipl.-Ing.
(86) Internationale Anmeldenummer: AT9900028
(87) Internationale Veröffentlichungsnummer: WO99047029

(56) Entgegenhaltungen:
- EP-A- 0 064 427
- DE-U- 29 706 653
- US-A- 3 949 780
- US-A- 5 687 884
- US-A- 5 706 973

## Beschreibung

Die Erfindung betrifft einen Behälteraufsatz für einen Trinkbehälter, gemäß dem einleitenden Teil von Anspruch 1.

Weiters bezieht sich die Erfindung auf einen Ventilkörpereinsatz für einen solchen Trinkbehälter-Behälteraufsatz sowie auf einen Trinkbehälter mit einem solchen Behälteraufsatz.

Mit Ventilen versehene Behälteraufsätze für Trinkbehälter werden beispielsweise dazu verwendet, um Kleinkindern oder Personen, die aufgrund von körperlichen Gebrechen Schwierigkeiten beim Trinken haben, das Trinken zu erleichtern. Auch bei von Sportlern verwendeten Trinkflaschen können solche Behälteraufsätze verwendet werden. Der Behälteraufsatz verschließt den Behälter dicht, so daß die im Behälter vorhandene Flüssigkeit nur durch die Trinköffnung(en) fließen kann. Dabei ist es aber wichtig, daß die Flüssigkeit bei einem Kippen oder Schütteln des Behälters nicht ungewollt ausfließt. Zu diesem Zweck werden Trinkventile angebracht, die nur bei einem Saugen an der Trinköffnung, z.B. einem Trinkschnabel, öffnen und den Durchgang der Flüssigkeit ermöglichen.

Des weiteren ist es auch bekannt, Luftventile am Behälter zu verwenden, um den Unterdruck auszugleichen, der beim Ansaugen der Flüssigkeit aus dem Behälter im Behälterinneren entsteht. Beispielsweise offenbart die US 4 545 491 A eine Saugflasche mit einem Luftventil am Boden; nachteilig ist hier jedoch, daß das Luftventil im Hinblick auf seine Montage und Reinigung einen eigenen Bodenteil - zusätzlich zum oberen Flaschendeckel mit Sauger - bedingt, und daß das Luftventil zufolge der Anordnung am Boden auch verhältnismäßig leicht verkleben kann.

Ein Trinkventil und ein Luftventil können auch nebeneinander am Behälteraufsatz angebracht sein, wie dies in der US 5 542 670 A gezeigt ist. Der Behälteraufsatz weist hier einen Trinkschnabel auf, der über das Trinkventil mit dem Behälterinneren in Verbindung steht, und daneben ist das Luftventil angebracht. Die beiden Ventile sind durch einen elastomeren Körper realisiert, der auf zylinderförmigen Elementen sitzt, die vom Behälteraufsatz quer zu dessen Hauptebene ins Behälterinnere ragen. Im einzelnen sind die Ventile dadurch gebildet, daß in dünneren Membranteilen des elastomeren Körpers kreuzförmige Schlitze vorhanden sind, die sich bei einem Saugen am Schnabel bzw. Unterdruck im Behälterinneren aufweiten, so daß Flüssigkeit bzw. Luft durch den jeweiligen Kreuzschlitz durchtreten kann. Wenn kein Druckunterschied vorhanden ist, schließen diese Membranteile wieder, um den Durchtritt von Flüssigkeit bzw. Luft zu verhindern. Diese Ventilkonstruktion ist zwar leicht reinigbar, weist jedoch eine Reihe von Nachteilen auf: So kann bei einem stärkeren Schütteln des Trinkbehälters Flüssigkeit durch die sich dann etwas öffnenden Kreuzschlitze austreten und verschüttet werden. Auch ist die Funktionsfähigkeit nach einiger Zeit nicht gesichert, da die elastischen Eigenschaften des elastomeren Körpers nachlassen und so das einwandfreie Öffnen und Schließen der Kreuzschlitze nicht mehr gesichert ist. Des weiteren kann z.B. bei einem Brei oder Fruchtsaft mit Partikeln etwas Substanz leicht in den Kreuzschlitzen haften bleiben, wodurch die Ventile offengehalten werden, so daß auch deshalb weitere Substanz ungehindert aus dem Behälter austreten kann. Ferner ist nachteilig, daß aufgrund der beschriebenen Ventilausbildung der Trinkbehälter nicht leergetrunken werden kann, da immer ein Rest der Flüssigkeit, entsprechend der Höhe der zylinderförmigen Elemente und des elastomeren Körpers, im Behälter zurückbleibt, wenn der Behälter beim Trinken geschwenkt wird. Überdies kann nach Beenden des Saugens noch ein relativ großes Volumen an Flüssigkeit im Trinkschnabel außerhalb des Trinkventils zurückbleiben, die bei einem Umdrehen oder Schütteln des Behälters aus dem Trinkschnabel austreten kann.

Auch gemäß der US 5 079 013 A (und ähnlich gemäß der GB 2 314 497 A) sind ein Trinkventil und ein Luftventil nebeneinander an einem Behälteraufsatz eines Trinkgefäßes angebracht. Das Trinkventil ist dabei als Tellerventil (bzw. Kegelventil) ausgeführt, das mittels einer Schraubenfeder in geschlossenem Zustand gehalten wird. Beim Saugen an einem darüber angebrachten Trinkschnabel wird der Ventilkörper entgegen der Federkraft vom Ventilsitz abgehoben, wodurch die Öffnung für den Austritt von Flüssigkeit aus dem Behälterinneren freigegeben wird. Das Luftventil ist gemäß der US 5 079 013 A ein Kugelventil, dessen Kugel mittels einer Schraubenfeder gegen einen am Behälteraufsatz angebrachten Ventilsitz gedrückt wird. Das Kugelventil ist in einem zylinderförmigen Element, das ins Behälterinnere ragt, angebracht. Gemäß der GB 2 314 497 ist dagegen das Luftventil mit einer gasdurchlässigen Membran gebildet. Das Trinkventil erfüllt zwar seine vorgesehene Aufgabe, nämlich einen Verschluß selbst bei einem Kippen oder Schütteln des Behälters zu gewährleisten, jedoch weist diese bekannte Ausbildung gravierende andere Nachteile auf. So sind die Ventile schwer zu montieren und insbesondere kaum zu reinigen, was ein Gesundheitsrisiko für die aus dem Trinkbehälter trinkenden Personen darstellt. Zur gründlichen Reinigung müßten die Ventile zerlegt werden, was für diesen Gebrauch unzumutbar wäre. Des weiteren ist die Herstellung mit den zahlreichen Ventil-Einzelteilen und deren Zusammenbau sehr aufwendig. Ein weiterer Nachteil besteht darin, daß auch hier die Flüssigkeit nicht vollständig aus dem Behälter gesaugt werden kann, und daß überdies Restflüssigkeit nach dem Schließen im Trinkschnabel verbleibt, die bei einem Umdrehen oder Schütteln des Behälters ausfließen kann, was bei Trinkbehältern, wenn sie von Kleinkindern gehalten werden, besonders ungünstig ist.

In der DE 297 06 653 U1 ist ein Trinkgefäß mit einem Becher und einem Deckel beschrieben, wobei der Deckel eine Austrittsöffnung aufweist, die in einem schnabelförmigen Mundstück angeordnet ist. Der Deckel weist auf der Innenseite eine "zylinderförmige Führung" auf, die als Verlängerung des schnabelförmigen Mundstücks ausgebildet ist, und die innen Öffnungsschlitze aufweist. In der zylinderförmigen Führung ist ein im Querschnitt im wesentlichen U-förmiger Formteil zur Dichtung zwischen dem Becherinnenraum und dem Raum im Mundstück vorhanden. Durch den beim Trinken entstehenden Unterdruck im Trinkgefäß wird der Formteil von der Innenfläche der zylinderförmigen Führung abgehoben, so dass das Getränk aus dem Becherinnenraum durch die Öffnungsschlitze in den Raum gelangen kann. Der Formteil sitzt dabei mit einem ringförmigen Vorsprung auf der zylinderförmige Führung.

Die US-A-5 687 884 betrifft einen Flüssigkeitsbehälter zur dosierten Ausgabe von pharmazeutischen Flüssigkeiten, wobei eine Ausgabevorrichtung auf einen Behälter aufgesetzt ist. Zwei Zylinder sind vorgesehen, so daß Flüssigkeit vom Behälter zwischen den zwei Zylindern in die Ausgabevorrichtung gelangen kann. Der Raum zwischen den zwei Zylindern wird durch einen elastisch verformbaren Kragen verschlossen, der eine Dichtlippe, die an dem inneren Zylinder anliegt, bildet. Durch Überdruck im Behälterinneren bzw. Unterdruck in der Abgabevorrichtung wird die Dichtlippe vom Innenzylinder abgehoben, so daß Flüssigkeit vorbeiströmen kann.

Es ist daher Ziel der Erfindung, einen Behälteraufsatz für einen Trinkbehälter der eingangs angeführten Art vorzusehen, der eine einfache, nichtsdestoweniger zuverlässig öffnende bzw. schließende Ventilkonstruktion aufweist, die leicht montier- und wieder abnehmbar, die problemlos und gut zu reinigen ist, und der insbesondere auch ein komplettes Leeren des Behälters beim Trinken ermöglicht.

Zur Lösung dieser Aurgabe sieht die Erfindung einen Behälteraufsatz wie in Anspruch 1 definiert vor. Vorteilhafte Ausführungsformen und Weiterbildungen sind Gegenstand der Unteransprüche.

Die Anordnung ist beim erfindungsgemäßen Behälteraufsatz so getroffen, daß die Dichtlippe an der Ausgangsseite des Ventilsitzes vorliegt, der mit der oder den Ventilöffnungen versehen ist. Bei einem Unterdruck am Ausgangsende des Trinkventils, also beim Saugen z.B. am Trinkschnabel, hebt sich bei dieser Ausbildung die Dichtlippe vom Ventilsitz ab, wodurch ein Durchlaß für die zu trinkende Flüssigkeit - die auch dickflüssig bzw. breiförmig sein kann - geschaffen wird. Sobald der Unterdruck wegfällt, bewegt sich die Dichtlippe wieder in die ursprüngliche Schließstellung zurück, so daß der Durchfluß wieder unterbunden wird. Der Verdrängungskörper kann ungefähr kolbenförmig ausgebildet sein und weist vorteilhafterweise eine möglichst gut der Gestalt der Innenwand des Trinkschnabels angepaßte Form auf, so daß ein möglichst kleiner, gegebenenfalls ringförmiger Zwischenraum verbleibt. Dadurch wird der Verbleib von Restflüssigkeit im Trinkschnabel nach Beenden des Saugens wesentlich reduziert, und wenn der Trinkbehälter danach geschüttelt oder umgedreht wird, wird praktisch keine Flüssigkeit verschüttet oder verspritzt, wozu auch die Oberflächenspannung der verbleibenden Flüssigkeit beiträgt.

An sich wäre für die Bildung des Trinkventils bzw. dessen Ventilsitzes eine Kammer mit eckigem Querschnitt möglich, wobei Dichtlippen z.B. an einander gegenüberliegenden Ventilsitz-Wänden von innen anliegen und lappenförmig sind. Für eine einfach herstellbare, eine zuverlässige Funktion gewährleistende Konstruktion ist es jedoch vorteilhaft, wenn der Ventilsitz in sich geschlossen ausgebildet ist, und wenn die Dichtlippe schlauchartig ausgebildet ist und in der Schließstellung von innen am Ventilsitz anliegt. Dabei wäre ein im Querschnitt ovaler Ventilsitz denkbar, im Hinblick auf die Herstellung günstiger ist jedoch ein im Querschnitt kreisrunder Ventilsitz. Auch kann der Ventilsitz eine zylinderartige Gestalt ebenso wie eine konische Form haben. Die Dichtlippe und der Ventilsitz können also sowohl gerade, mit gleichbleibendem Durchmesser in Achsrichtung, verlaufen als auch im Querschnitt bzw. Durchmesser zu- oder abnehmen.

Für eine einfache Montage ist es günstig, wenn die Dichtlippe einstückig mit einem Basisteil verbunden ist. Der Basisteil kann dabei zur Befestigung des Ventilkörpers dienen, wobei die Möglichkeit gegeben ist, die Dichtlippe einfach vom Ventilsitz für eine Reinigung abzuziehen, ohne an der Dichtlippe direkt anziehen zu müssen (wodurch sie möglicherweise beschädigt werden könnte).

Die Erfindung sieht in Zusammenhang mit diesem Aspekt auch einen Ventilkörpereinsatz vor, der einfach herstellbar, leicht montierbar und problemlos zu reinigen ist, und der dadurch gekennzeichnet ist, daß mindestens eine z.B. schlauchförmige Dichtlippe einstückig mit einem zur Befestigung dienenden Basisteil verbunden ist, wobei die Dichtlippe auf der dem Basisteil gegenüberliegenden Seite offen ist und einstückig mit einem Verdrängungskörper verbunden ist, der auf der dem Basisteil gegenüberliegenden Oberseile geschlossen ist.

Eine für ein einfaches, nichtsdestoweniger stabiles Festsitzen des Ventilkörpers am Ventilsitz vorteilhafte Ausbildung wird erzielt, wenn der Basisteil des Ventilkörpers auf eine stutzenartige Ventilsitz-Verlängerung aufsteckbar bzw. aufgesteckt ist. Die Ventilsitz-Verlängerung ragt dabei in das Behälterinnere, und der Basisteil kann eine ausreichend tiefe Eintiefung bzw. eine ausreichend hohe Außenwand, gegebenenfalls im Abstand zu einer Innenwand, aufweisen und so auf die Ventilsitz-Verlängerung von dessen Stirnende her aufgeschoben sein; es wäre aber auch denkbar, daß der Basisteil nicht oder nur etwas über die Ventilsitz-Verlängerung vorragt, d.h. im wesentlichen im Inneren der Ventilsitz-Verlängerung angeordnet ist, wobei er auch formschlüssig, z.B. mittels noppenförmiger Schnappvorsprünge an seiner Außenseite, an der Innenseite der stutzenartigen Ventilsitz-Verlängerung gehalten sein kann.

Es ist besonders vorteilhaft, wenn die stutzenartige Ventilsitz-Verlängerung mindestens eine z.B. endseitige Verdickung oder Vertiefung zum Aufschnappen des Basisteils des Ventilkörpers aufweist. Denkbar wäre an sich auch ein Rastwulst oder allgemein Rastvorsprung in einem anderen Bereich, z.B. im mittleren Bereich, der Ventilsitz-Verlängerung, jedoch wird durch die endseitige Anordnung die Ausbildung des Basisteils vereinfacht. Die Verdickung bzw. der Rastvorsprung kann um den gesamten Umfang herum verlaufen, kann aber auch nur an einzelnen Stellen, etwa an einander diametral gegenüberliegenden Stellen der stutzenartigen Verlängerung, angebracht sein. Der Rastvorsprung kann an sich selbstverständlich auch am Basisteil angebracht sein und mit einer Rastvertiefung in der Ventilsitz-Verlängerung zusammenarbeiten. Durch das Aufschnappen des Basisteils auf der stutzenartigen Verlängerung wird ein (axiales) Verrutschen der Dichtlippe am Ventilsitz mit großer Sicherheit vermieden, so daß die richtige Position der Dichtlippe am Ventilsitz gewahrt bleibt, und überdies wird beim Montieren des Ventilkörpers an der Ventilsitz-Verlängerung durch das Einschnappen ein spürbares und hörbares "Signal" für die richtige Position der Dichtlippe am Ventilsitz vorgesehen, was den Zusammenbau - auch durch ungeübte Personen, z.B. nach dem Reinigen - erleichtert.

An sich wäre es denkbar, an der stutzenartigen Ventilsitz-Verlängerung - außen und/oder innen - die Rast-Verdickung auszubilden, ohne ein Gegenstück am Ventilkörper-Basisteil vorzusehen, so daß der Halt zufolge einer elastischen Materialeindrückung des Basisteils sichergestellt wird. Um die Möglichkeit eines Verrutschens der Dichtlippe am Ventilsitz noch weiter zu minimieren, ist es jedoch besonders günstig, wenn der Basisteil des Ventilkörpers in Entsprechung zur Verdickung der Ventilsitz-Verlängerung mindestens eine Rastnut aufweist. Wenn die Verdickung an der Ventilsitz-Verlängerung endseitig angebracht ist, wird im Basisteil zweckmäßig mindestens eine hinterschnittene Einsteck-Nut vorgesehen, in der in der montierten Position der Stirnteil der stutzenartigen Ventilsitz-Verlängerung aufgenommen ist. Die Rastnut des Basisteils ist vorteilhafterweise hinsichtlich der Stelle und Größe genau an die Verdickung der Ventilsitz-Verlängerung angepaßt. Dadurch ist ein exakter, stabiler Halt zwischen der Dichtlippe und dem Ventilsitz in einer definierten Stellung gegeben.

Eine besonders vorteilhafte Ausführungsform ist gegeben, wenn der Basisteil des Ventilkörpers mindestens zwei übereinander angebrachte Rastnuten aufweist, die mit ein und derselben Verdickung der Ventilsitz-Verlängerung zur Erzielung unterschiedlicher Rastpositionen zusammenarbeiten. Die Verdickung der Ventilsitz-Verlängerung kann dadurch z.B. in die weiter oben oder außen gelegene Rastnut einrasten, wobei dann nur der vordere Teil der Dichtlippe am - hier vorzugsweise konischen - Ventilsitz anliegt, wodurch ein vergleichsweise niedriger Dichtdruck erhalten wird und daher beim Trinken ein geringerer Saugdruck aufgebracht werden muß. Dies ist besonders für Kleinkinder günstig, die noch nicht stark genug saugen können. Der Ventilkörper kann aber weiter in den Ventilsitz hineingeschoben werden, wenn die Verdickung der Ventilsitz-Verlängerung in die tiefere, weiter innen gelegene Rastnut einrastet. Ein wesentlich größerer Teil der Dichtlippe liegt dann am Ventilsitz an, so daß ein stärkerer Saugdruck notwendig ist, um die Dichtlippe vom Ventilsitz abzuheben und Flüssigkeit aus dem Behälter herauszusaugen. Diese Einstellung ist für Kleinkinder angebracht, die schon stärker saugen können, und bei denen die Gefahr des Schüttelns und Wegwerfens des Trinkbehälters und dadurch des Auslaufens der Flüssigkeit aus dem Trinkbehälter größer ist.

Es ist von Vorteil, wenn die stutzenartige Ventilsitz-Verlängerung mit mindestens einem Längsschlitz für den Durchlaß von Flüssigkeit versehen ist. Der Längsschlitz sichert den Durchgang von Flüssigkeit zum eigentlichen Ventil, auch wenn die Dichtlippe in diesem Bereich mit dem Basisteil einstückig verbunden ist, und er kann je nach Viskosität der Flüssigkeit breiter oder schmäler ausgeführt sein; der Längsschlitz kann zum stirnseitigen freien Ende der stutzenartigen Ventilsitz-Verlängerung hin offen oder aber auch geschlossen sein, wobei er mehr oder weniger lang sein kann. Dadurch kann die Flüssigkeit leicht zum Ventilsitz gelangen, so daß genügend Flüssigkeit aus dem Behälter herausgesaugt werden kann.

Für ein einfaches Einschnappen der Verdickung an der Ventilsitz-Verlängerung auch in die äußere der zwei Rastnuten ist es vorteilhaft, wenn mindestens ein radialer Steg in der weiter innen liegenden Rastnut angebracht ist, der so hoch wie diese innere Rastnut ist und der stirnseitig in mindestens einen Längsschlitz paßt. Der Steg kann, wenn er zum Längschlitz ausgerichtet ist, in diesen eindringen, so daß ein vollständiges Aufdrücken des Basisteils auf die Ventilsitz-Verlängerung möglich ist, so daß die Verdickung in die dickere Rastnut einrastet, und die Dichtlippe mit ihrer gesamten Länge am Ventilsitz anliegt; wenn aber der Basisteil verdreht wird, dann bildet der Steg einen Anschlag beim Aufdrücken des Basisteils auf die Ventilsitz-Verlängerung, sobald die Stellung erreicht ist, in der die Verdickung an der Ventilsitz-Verlängerung in die weiter außen liegende Rastnut einschnappen kann, so daß die Verdickung in diese Rastnut einrastet und nur der oberste Teil der Dichtlippe am Ventilsitz anliegt.

Für einen guten Durchfluß der Flüssigkeit zum Ventilsitz ist es hier auch vorteilhaft, wenn (jeweils) zwei Längsschlitze bzw. dazu ausgerichtete Längskanäle über eine in Umfangsrichtung verlaufende Vertiefung, die an den Ventilsitz angrenzt, miteinander verbunden sind. Es wäre aber auch denkbar, daß (jeweils) eine axiale Vertiefung vom (jeweiligen) Längsschlitz ausgeht und an den Ventilsitz angrenzt. Bei einer größeren Anzahl von Längsschlitzen könnten auch mehrere oder alle Längsschlitze über eine, z.B. ringförmige, Vertiefung miteinander verbunden sein. Diese Vertiefung begünstigt den Durchtritt von Flüssigkeit in genügendem Ausmaß zum Ventilsitz.

Für das vollständige Leeren des Behälters ist es jedenfalls von Vorteil, wenn der Längsschlitz bis zur Stelle der Verschneidung der stutzenartigen Ventilsitz-Verlängerung mit der Hauptebene des Behälteraufsatzes reicht.

Gemäß einer bevorzugten Ausführungsform ist vorgesehen, daß der Basisteil über einen Verbindungskörper einstückig mit einem Basisteil für mindestens einen elastomeren, schlauchförmigen Ventilkörper eines in an sich bekannter Weise weiters vorgesehenen Luftventils verbunden ist, der auf einen rohrförmigen Ventilsitz, der sich im wesentlichen quer zur Hauptebene des Behälteraufsatzes im Bereich mindestens einer Lufteintritts-Öffnung erstreckt, aufgeschoben ist. Beim Trinken, d.h. Saugen, von Flüssigkeit aus dem Behälter entsteht im Behälter ein Unterdruck, verglichen mit dem Umgebungsdruck, und der höhere äußere Luftdruck drückt somit auf die Innenseite des elastomeren schlauchförmigen Ventilkörpers, wodurch dieser geringfügig vom Ventilsitz abgehoben wird; dadurch kann Luft zwischen Ventilkörper und Ventilsitz in den Innenraum des Behälters einströmen, wodurch ein Druckausgleich stattfindet. Dadurch, daß nun die Ventilkörper für das Luftventil und für das Trinkventil einstückig verbunden und aus elastomeren Material hergestellt sind, können beide gleichzeitig in einem einzigen Vorgang auf den eigentlichen Behälteraufsatz aufgesetzt und wieder abgezogen werden, wodurch die Montage und insbesondere die Reinigung ganz besonders einfach erfolgt. Auch die Herstellung dieser Ausführungsform ist unkompliziert.

Eine besonders günstige Ausführungsform in Hinblick auf die Ausbildung des Trinkventils mit mehreren, z.B. zwei, Raststeilungen besteht darin, daß der Verbindungskörper Basisteile für mehrere, z.B. zwei, elastomere, schlauchförmige Luftventil-Ventilkörper bildet. Dabei kann jeweils einer der schlauchförmigen Ventilkörper - je nach Drehstellung des Trinkventil-Basisteils - auf dem rohrförmigen Ventilsitz des Luftventils aufgeschoben werden, so daß in jeder der Trinkventil-Raststellungen ein komplettes Luftventil zur Verfügung steht.

Für einen sicheren Lufteintritt in den Behälter auch bei eher geringem Druckunterschied besteht eine vorteilhafte Ausführungsform darin, daß der rohrförmige Ventilsitz des Luftventils mit mindestens einem schlitzförmigen Luftdurchlaß ausgebildet ist. Dabei ist die Anzahl dieser Luftdurchlässe ebenso wie ihre Breite und Länge variabel. Für eine gute Funktion sowie einfache Herstellung haben sich in praktischen Tests zwei einander gegenüberliegende Schlitze, die zum Ende des Ventilsitzes hin offen sind, als besonders günstig erwiesen. Ein Ausgleich des Unterdruckes ist dabei selbst bei einem sehr schnellen Trinken möglich.

Für eine optimale Belüftung ist es besonders vorteilhaft, wenn die Schlitzlänge des schlitzförmigen Luftdurchlasses über mindestens gleich der halben Höhe des Ventilsitzes ist.

Für ein besonders leichtes Abziehen des so gegebenen einstückigen Ventilkörpereinsatzes ist es von Vorteil, wenn vom Verbindungskörper mindestens ein Griff absteht. Der z.B. plattenförmige Griff ist günstigerweise so angebracht, daß sich beim Anziehen am Griff alle Ventilkörper gleichzeitig von den Ventilsitzen lösen. Durch den Griff wird die Handhabung erleich tert, und ein mögliches Einreißen oder Verformen wird verhindert. Überdies wird eine insgesamt "sperrige" Ausbildung des Ventilkörpereinsatzes erzielt, so daß einem Verschlucken durch ein Kind sicher entgegengewirkt und dem hierfür vielfach vorgeschriebenen sog. "small part" - Test entsprochen wird.

Eine zur einfachen Reinigung in einem Geschirrspüler günstige Konstruktion besteht darin, daß der Verbindungskörper oder der Griff mindestens ein Loch aufweist. Denkbar wären zwei Löcher, jeweils eines an jeder Seite des Griffs. Mit Hilfe des Lochs kann der Ventileinsatz in einem Geschirrspüler an Stäben von Korbeinsätzen angebracht werden.

Der Ventilkörper (-einsatz) besteht allgemein aus Gummi bzw. einem gummiartigen Kunststoff, besonders bevorzugt aus Silikonkautschuk oder einem thermoplastischen Elastomer. Dadurch sind die elastomeren und auch die gegenüber Getränken und Nahrungsmitteln stabilen Eigenschaften, aber auch eine bezüglich Gesundheit unbedenkliche Anwendung und lange Lebensdauer gegeben. Andererseits besteht der Behälteraufsatz beispielsweise aus Polypropylen (PP), Polyethylen (PE) oder Polycarbonat (PC).

Die Erfindung wird nachstehend anhand von in der Zeichnung dargestellten bevorzugten Ausführungsbeispielen, auf die sie jedoch nicht beschränkt sein soll, noch weiter erläutert. Im einzelnen zeigen in der Zeichnung:
Fig. 1 einen Axialschnitt eines Trinkbehälters mit einem Behälteraufsatz mit einem Trinkventil und einem Luftventil, gemäß der Linie II-II in Fig. 3, wobei die Ventile in der normalen Schließstellung gezeigt sind;
Fig. 2 einen entsprechenden Schnitt, gemäß der Linie II-II in Fig. 3, des Behälteraufsatzes dieses Trinkbehälters, wobei nun jedoch das Trinkventil in der Offenstellung gezeigt ist;
Fig. 3 eine Ansicht des Behälteraufsatzes (ohne Ventilkörpereinsatz) von unten, gemäß Pfeil III in Fig. 2;
Fig. 4 einen Schnitt durch das Trinkventil und den Trinkschnabel gemäß der Linie IV-IV in Fig. 3;
Fig. 5 einen Schnitt durch das Trinkventil gemäß der Linie V-V in Fig. 4;
Fig. 6 einen Schnitt durch den Behälteraufsatz gemäß der Linie II-II in Fig. 3, jedoch ohne Ventilkörper;
Fig. 7 eine Draufsicht auf den Behälteraufsatz;
Fig. 8 eine Draufsicht auf den Ventilkörpereinsatz allein;
Fig. 9 eine Draufsicht auf einen modifizierten Ventilkörpereinsatz mit zwei Trinkventil-Stellungen und mit zwei schlauchartigen Luftventil-Ventilkörpern;
Fig. 10 einen Schnitt durch diesen Ventilkörpereinsatz gemäß der Linie X-X in Fig. 9;
Fig. 11 einen Schnitt durch das Trinkventil, wobei die Ventilsitz-Verlängerung in eine äußere Rastnut eingerastet ist; und
Fig. 12 einen entsprechenden Schnitt durch das Trinkventil, wobei die Ventilsitz-Verlängerung aber nun in die tiefere Rastnut eingerastet ist.

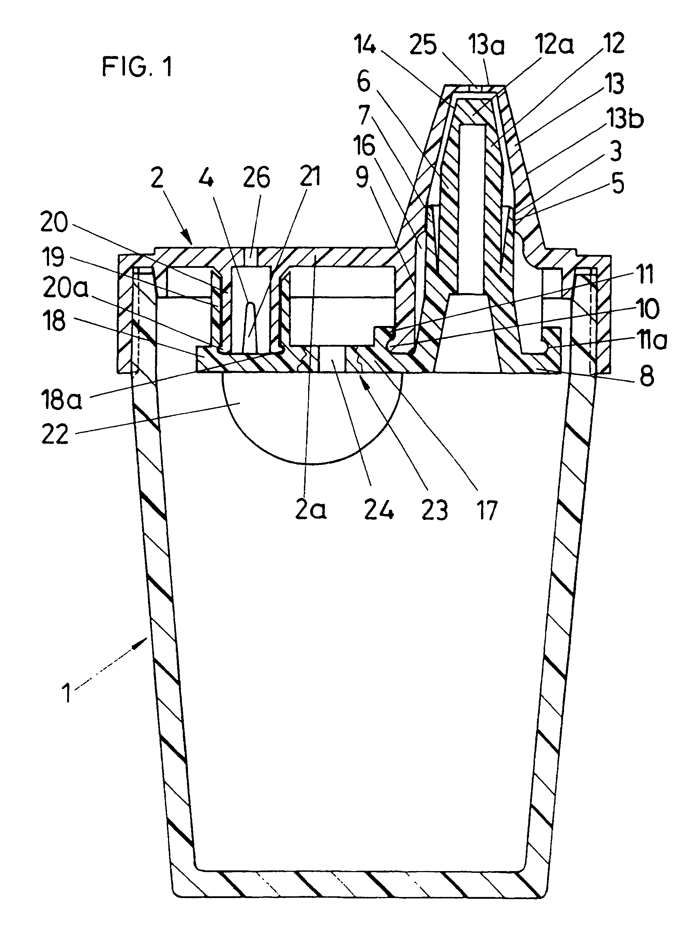

In Fig. 1 ist ein Trinkbehälter 1 mit einem Behälteraufsatz 2 gemäß der derzeit besonders bevorzugten Ausführungsform der Erfindung dargestellt, wobei am Behälteraufsatz 2 ein Trinkventil 3 und ein Luftventil 4 angebracht sind. Das Trinkventil 3 besteht aus einem zylinderartigen, in sich geschlossenen Ventilsitz 5 und einem Ventilkörper 6, der eine schlauchartig ausgebildete Dichtlippe 7 aufweist, die in der Schließstellung (s. Fig. 1) von innen am Ventilsitz 5 anliegt. Diese Dichtlippe 7 ist einstückig mit einem Basisteil 8 verbunden, der auf eine stutzenartige Ventilsitz-Verlängerung 9 aufgesteckt ist; dabei ist eine endseitige Verdickung 10 der Ventilsitz-Verlängerung 9 in einer außen zur Bildung einer Rastnut 11a hinterschnittenen Einsteck-Vertiefung 11 des Basisteils 8 aufgenommen.

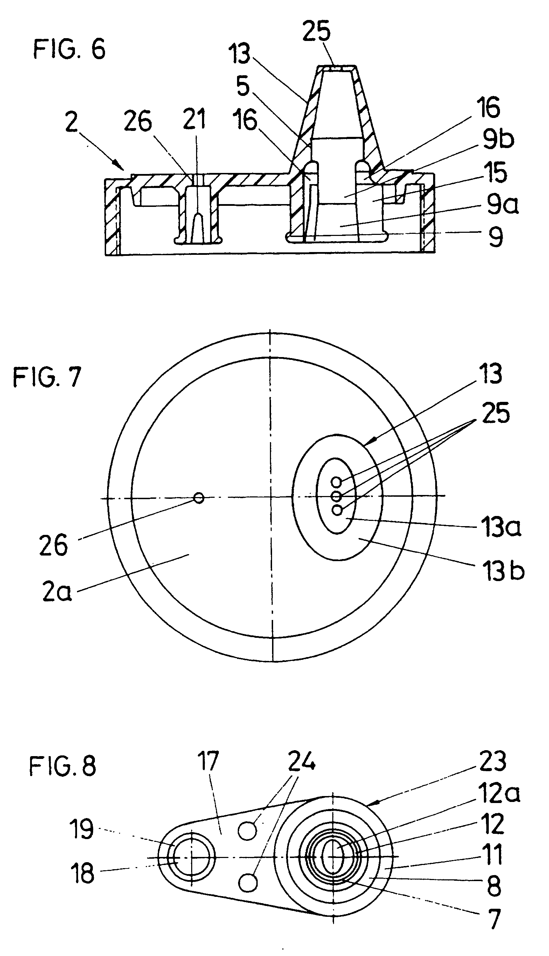

Mit der Dichtlippe 7 bzw. dem Basisteil 8 ist weiters ein Verdrängungskörper 12 einstückig verbunden; dieser Verdrängungskörper 12 ist beim gezeigten Ausführungsbeispiel hohl (könnte aber auch - aus Reinigungsgründen - voll sein), jedoch an der Oberseite 12a geschlossen, und er ragt in einen Trinkschnabel 13 des Behälteraufsatzes 2 unter Freilassung eines Durchflußkanals 14 hinein. Zu diesem Zweck kann, wie sich aus Fig. 8 ergibt, der Verdrängungskörper 12 von einer kreisrunden Querschnittsform an seiner Basis zu einer ovalen, länglichen Querschnittsform an seiner Oberseite 12a übergehen, d.h. "Abflachungen" an zwei gegenüberliegenden Seiten aufweisen, wodurch der Durchflußkanal 14 beidseits des Verdrängungskörpers 12 definiert wird. Es kann aber auch ein ringförmiger Durchflußkanal vorliegen.

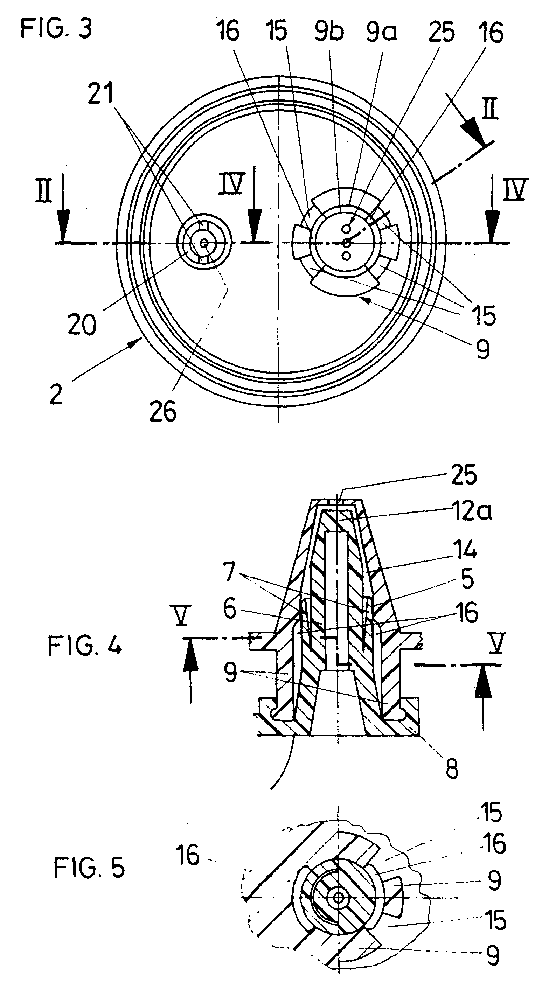

Die Ventilsitz-Verlängerung 9 weist mehrere (insgesamt z.B. vier) Längsschlitze 15 für den Durchlaß von Flüssigkeit auf (Fig. 3, 5 und 6) auf, wobei jeweils zwei Längsschlitze 15 über eine in Umfangsrichtung verlaufende Vertiefung 16, die an den Ventilsitz 5 grenzt, verbunden sind. Gemäß Fig. 3 und 6 sind die zwei in Umfangsrichtung verlaufenden Vertiefungen 16, die jeweils zwei der Längschlitze 15 verbinden, an den Enden jeweils durch einen an eine schräge Innenwand 9a anschließenden Teil 9b der Ventilsitz-Verlängerung 9 begrenzt, der bündig in den Ventilsitz 5 übergeht. Die schräge Innenwand 9a verengt sich vom stirnseitigen Ende der stutzenartigen Ventilsitz-Verlängerung 9 her, um den Ventilkörper 6 leichter einführen zu können. Die Längsschlitze 15 enden an der Stellung der Verschneidung der Stutzen-Verlängerung mit der Unterseite des eigentlichen Deckelkörpers 2a des Behälteraufsatzes 2, um den Behälter 1 vollständig entleeren zu können. Die Längsschlitze 15 sind zum stirnseitigen Ende der stutzenartigen Ventilsitz-Verlängerung 9 hin offen. Die Flüssigkeit kann durch die Längsschlitze 15 hindurch und durch die Vertiefung 16 zum Ventilsitz 5 gelangen, so daß genügend Flüssigkeit aus dem Behälter 1 herausgesaugt werden kann.

Der Basisteil 8 ist gemäß Fig. 1, 2 und 8 einstückig mit einem elastomeren, plattenförmigen Verbindungskörper 17 ausgebildet, der zugleich einen Basisteil 18 für einen elastomeren, schlauchförmigen, an der Stirnseite mit einer Fase versehenen Ventilkörper 19 des Luftventils 4 bildet, welcher auf einem rohrförmigen Ventilsitz 20 aufgeschoben ist. Der Ventilsitz 20 ragt ebenfalls quer zur Hauptebene des Behälteraufsatzes 2 stutzenförmig in das Behälterinnere, wobei der Durchmesser kleiner ist als der Durchmesser der Ventilsitz-Verlängerung 9 des Trinkventils 3, beide aber gleich tief in das Behälterinnere vorstehen. Der Ventilsitz 20 weist zwei schlitzförmige Luftdurchlässe 21 (s. Fig. 3 und 6) auf, die zum stirnseitigen Ende des stutzenförmigen Ventilsitzes 20 hin offen sind. Das stirnseitige Ende 20a des Ventilsitzes 20 ist verdickt und in einer Rastnut 18a des Basisceils 18 aufgenommen.

Auf dem Verbindungskörper 17 des so gebildeten einstückigen elastomeren Ventilkörpereinsatzes 23 ist ein plattenförmiger Griff 22 zwischen den beiden Ventilen 3, 4 angebracht. Durch ein einfaches Anziehen an diesem Griff 22 kann der Ventilkörpereinsatz 23 auf einmal und sehr unkompliziert von den Ventilsitzen 5, 20 abgezogen werden. Des weiteren weist der Verbindungskörper 17 zwei Löcher 24 auf, womit der Ventilkörpereinsatz 23 in einem Geschirrspüler an Stäben von Einsätzen angebracht werden kann (s. Fig. 8). Selbstverständlich kann auch nur ein Loch oder können mehr als zwei Löcher vorgesehen sein.

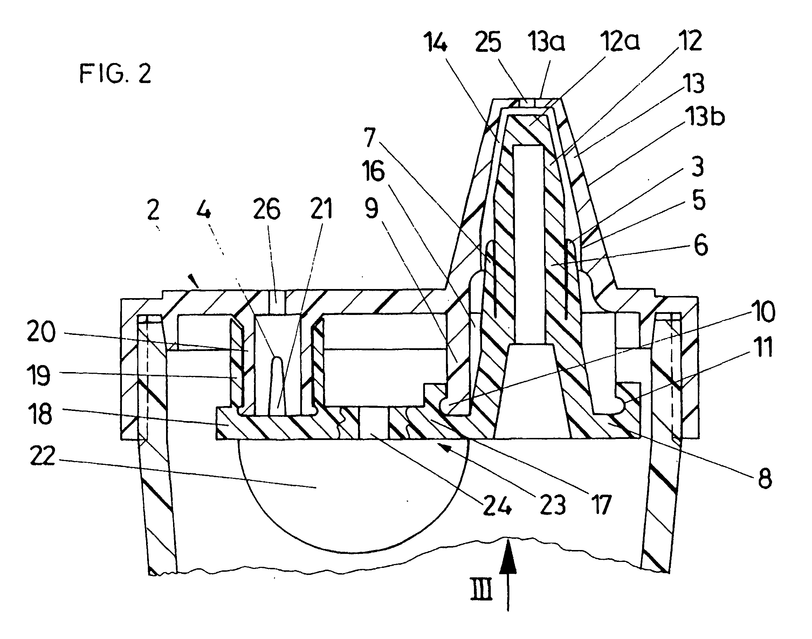

Über dem Trinkventil 3, am Trinkschnabel 13, sind beispielsweise drei Trinköffnungen 25 vorhanden (s. Fig. 1, 2 und 7). Diese Trinköffnungen 25 sind an der höchsten Stelle 13a des Trinkschnabels 13 angebracht, wobei der Trinkschnabel 13 in Richtung zur Oberfläche des Behälteraufsatzes 2a hin im Durchmesser zunimmt. Über dem Luftventil 4 ist zumindest eine Belüftungsöffnung 26 im Behälteraufsatz vorhanden (s. Fig 3, 6 und 7). Diese Öffnungen 25, 26 erlauben einerseits den Austritt von Flüssigkeit aus dem Trinkventil 3 (Öffnungen 25) und andererseits den Eintritt von Luft zum Ventilsitz 20 des Luftventils (Öffnung 26). Wenn daher am Trinkschnabel 13 gesaugt wird, wird die Dichtlippe 7 vom Ventilsitz 5 abgehoben und radial einwärts bewegt (s. Fig. 2), so daß Flüssigkeit durch den Durchflußkanal 14 und aus der Öffnung 25 fließen kann. Beim Saugen von Flüssigkeit aus dem Trinkbehälter 1 entsteht im Behälter 1 ein Unterdruck, verglichen mit dem Umgebungsdruck, und der höhere äußere Luftdruck drückt somit auf die Innenwand des Ventilkörpers 19, wodurch dieser geringfügig vom Ventilsitz 20 radial auswärts abgehoben wird und Luft durch die Öffnung 26 sowie den Durchlaß zwischen Ventilkörper 19 und Ventilsitz 20 in den Innenraum des Behälters einströmt, bis ein Druckausgleich erfolgt ist.

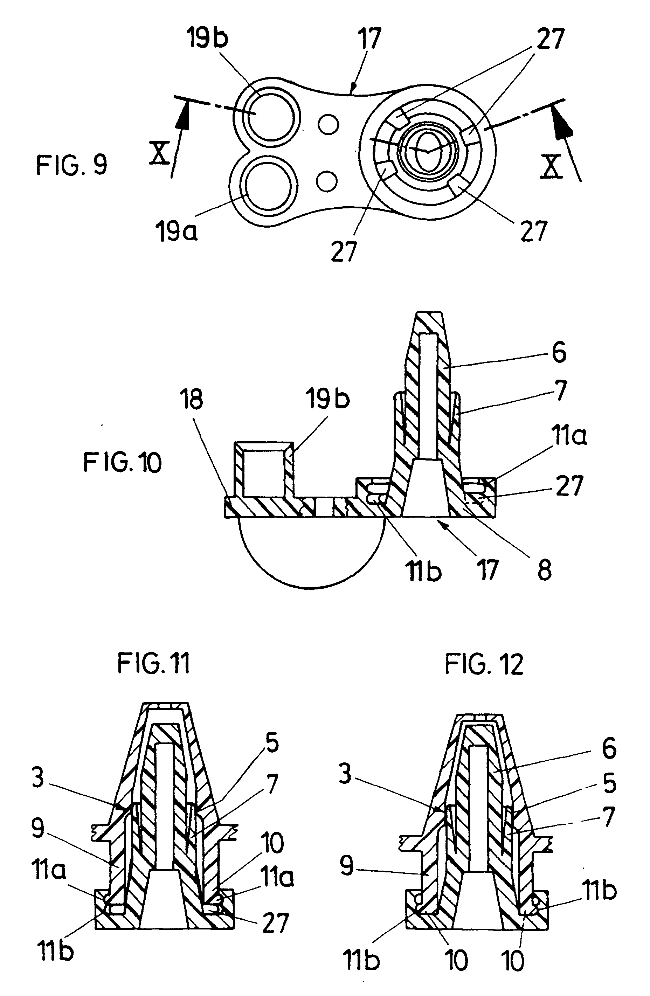

Gemäß Fig. 9 bildet der Verbindungskörper 17 zugleich einen Basisteil 18 für zwei elastomere, schlauchförmige Ventilkörper 19a, 19b des Luftventils 4. Der Basisteil 8 des Ventilkörpers 6 des Trinkventils 3 ist mit beispielsweise zwei (gegebenenfalls auch mehr) übereinander angebrachten Rastnuten 11a, 11b (s. Fig. 10 bis 12) ausgebildet, wovon die weiter innen liegende, innere Rastnut 11b vier radiale Stege 27 (s. Fig. 9) aufweist.

In der Stellung gemäß Fig. 11 ist der Basisteil 8 in einer derartigen Drehposition auf die stutzenartige Ventilsitz-Verlängerung aufgeschoben, daß die Stege 27 relativ zu den Längsschlitzen 15 in Umfangsrichtung versetzt sind, so daß sie einen Anschlag für die Ventilsitz-Verlängerung 9 beim Verrasten der Ventilsitz-Verlängerung mit dem Basisteil 8 bilden, d.h. ein Aufdrücken des Basisteils 8 auf die Ventilsitz-Verlängerung 9 ist nur bis zu dieser gezeigten Raststellung gemäß Fig.11 möglich; in dieser Drehposition des Basisteils 8 ist der schlauchförmige Ventilkörper 19a (s. Fig. 9) auf den Ventilsitz 20 des Luftventils 4 (hier nicht dargestellt, s. aber z.B. Fig. 1 bis 3 und Fig. 6) aufgeschoben. Nur der vorderste Teil der Dichtlippe 7 liegt in dieser Raststellung gemäß Fig. 11 am Ventilsitz 5 an, so daß ein relativ geringer Saugdruck notwendig ist, damit Flüssigkeit aus dem Trinkbehälter 1 durch das Trinkventil 3 fließt.

In der Drehposition des Basisteils 8 gemäß Fig. 12 ist demgegenüber der schlauchförmige Ventilkörper 19b. Fig. 9) auf den Ventilsitz 20 des Luftventils 4 (s. Fig. 1 bis 3 und Fig. 6) aufgeschoben, und die Stege 27 sind direkt mit den Längschlitzen 15 ausgerichtet, so daß die Ventilsitz-Verlängerung 9 ungehindert zur Gänze bis in die tiefe Rastnut 11b eingeschoben werden kann und dort verrastet wird. Ein wesentlich größerer Teil der Dichtlippe 7 liegt nun am Ventilsitz 5 an, wodurch ein größerer Saugdruck notwendig ist, damit Flüssigkeit aus dem Trinkbehälter 1 durch das Trinkventil 3 fließt.

## Patentansprüche

1. Behälteraufsatz (2) für einen Trinkbehälter (1) insbesondere Deckel mit Schraubverschluß und Trinkschnabel oder Sauger, mit mindestens einem Trink-Einwegventil (3) benachbart mindestens einer Trinköffnung (25), mit einem Ventilsitz (5), der sich im wesentlichen quer zur Hauptebene des Behälteraufsatzes (2) erstreckt, und mit einem aus elastomerem Material bestehenden Ventilkörper (6), der in der Schließstellung am Ventilsitz (5) anliegt, **dadurch gekennzeichnet, daß** der Ventilkörper (6) zumindest eine sich von einem Basisteil (8) in Richtung der Trinköffnung (25) erstreckende Dichtlippe (7) aufweist, die in Richtung der Trinköffnung (25) hin offen ist und die einstückig mit einem Verdrängungskörper (12) verbunden ist, der in den Trinkschnabel (13) des Behälteraufsatzes (2) unter Freilassung eines Durchflußkanals (14) hineinragt.

2. Behälteraufsatz (2) nach Anspruch 1, **dadurch gekennzeichnet, daß** der Ventilsitz (5) in sich geschlossen ausgebildet ist, und daß die Dichtlippe (7) schlauchartig ausgebildet ist und in der Schließstellung von innen am Ventilsitz (5) anliegt.

3. Behälteraufsatz (2) nach Anspruch 1 oder 2, **dadurch gekennzeichnet, daß** die Dichtlippe (7) einstückig mit einem Basisteil (8) verbunden ist.

4. Behälteraufsatz (2) nach Anspruch 3, **dadurch gekennzeichnet, daß** der Basisteil (8) des Ventilkörpers (6) auf eine stutzenartige Ventilsitz-Verlängerung (9) aufsteckbar bzw. aufgesteckt ist.

5. Behälteraufsatz (2) nach Anspruch 4, **dadurch gekennzeichnet, daß** die stutzenartige Ventilsitz-Verlängerung (9) mindestens eine, insbesondere endseitige, Verdickung (10) oder Vertiefung zum Aufschnappen des Basisteils (8) des Ventilkörpers (6) aufweist.

6. Behälteraufsatz (2) nach Anspruch 5, **dadurch gekennzeichnet, daß** der Basisteil (8) des Ventilkörpers (6) in Entsprechung zur Verdickung (10) der Ventilsitz-Verlängerung (9) mindestens eine Rastnut (11) aufweist.

7. Behälteraufsatz (2) nach Anspruch 6, **dadurch gekennzeichnet, daß** der Basisteil (8) des ventilkörpers (6) mehrere, insbesondere zwei, übereinander angebrachte Rastnuten (11a, 11b) aufweist, die mit ein und derselben Verdickung (10) der Ventilsitz-Verlängerung (9) zur Erzielung unterschiedlicher Rastpositionen zusammenarbeiten.

8. Behälteraufsatz (2) nach einem der Ansprüche 5 bis 7, **dadurch gekennzeichnet, daß** die stutzenartige Ventilsitz-Verlängerung (9) mit mindestens einem Längsschlitz (15) für den Durchlaß von Flüssigkeit versehen ist.

9. Behälteraufsatz (2) nach den Ansprüchen 7 und 8, **dadurch gekennzeichnet, daß** mindestens ein radialer Steg (27) in der weiter innen liegenden Rastnut (11b) angebracht ist, der so hoch wie diese innere Rastnut (11b) ist und der stirnseitig in mindestens einen Längsschlitz (15) paßt.

10. Behälteraufsatz (2) nach Anspruch 8 oder 9, **dadurch gekennzeichnet, daß** jeweils zwei Längsschlitze (15) bzw. dazu ausgerichtete Längskanäle über eine in Umfangsrichtung verlaufende Vertiefung (16), die an den Ventilsitz (5) angrenzt, miteinander verbunden sind.

11. Behälteraufsatz (2) nach einem der Ansprüche 8 bis 10, **dadurch gekennzeichnet, daß** der Längsschlitz (15) bis zur Stelle der Verschneidung der stutzenartigen Ventilsitz-Verlängerung (9) mit der Hauptebene des Behälteraufsatzes (2) reicht.

12. Behälteraufsatz (2) nach einem der Ansprüche 3 bis 11, **dadurch gekennzeichnet, daß** der Basisteil (8) über einen Verbindungskörper (17) einstückig mit einem Basisteil (18) für mindestens einen elastomeren, schlauchförmigen Ventilkörper (19) eines weiters vorgesehenen Luftventils (4) verbunden ist, der auf einen rohrförmigen Ventilsitz (20), der sich im wesentlichen quer zur Hauptebene des Behälteraufsatzes (2) im Bereich mindestens einer Lufteintritts-Öffnung (26) erstreckt, aufgeschoben ist.

13. Behälteraufsatz (2) nach Anspruch 12, **dadurch gekennzeichnet, daß** der Verbindungskörper (17) Basisteile (18a, 18b) für mehrere, insbesondere zwei, elastomere, schlauchförmige Luftventil-Ventilkörper (19a, 19b) bildet.

14. Behälteraufsatz (2) nach Anspruch 12 oder 13, **dadurch gekennzeichnet, daß** der rohrförmige Luftventil-Ventilsitz (20) mit mindestens einem schlitzförmigen Luftdurchlaß (21) ausgebildet ist.

15. Behälteraufsatz (2) nach Anspruch 14, **dadurch gekennzeichnet, daß** die Schlitzlänge des schlitzförmigen Luftdurchlasses mindestens gleich der halben Höhe des Ventilsitzes ist.

16. Behälteraufsatz (2) nach einem der Ansprüche 12 bis 15, **dadurch gekennzeichnet, daß** vom Verbindungskörper (17) mindestens ein Griff (22) absteht.

17. Behälteraufsatz (2) nach einem der Ansprüche 12 bis 16, **dadurch gekennzeichnet, daß** der Verbindungskörper (17) oder der Griff (22) mindestens ein Loch (24) aufweist.

18. Behälteraufsatz (2) nach einem der Ansprüche 1 bis 17, **dadurch gekennzeichnet, daß** der bzw. die Ventilkörper (6; 19) aus Silikonkautschuk oder einem thermoplastischen Elastomer besteht bzw. bestehen.

19. Behälteraufsatz (2) nach einem der Ansprüche 1 bis 18, **dadurch gekennzeichnet, daß** er ein Schraubverschluß-Deckel mit Trinkschnabel (13) ist.

20. Ventilkörpereinsatz (23), **dadurch gekennzeichnet, daß** mindestens eine, insbesondere schlauchförmige, Dichtlippe (7) einstückig mit einem zur Befestigung dienenden Basisteil (8) verbunden ist, wobei die Dichtlippe (7) auf der dem Basisteil (8) gegenüberliegenden Seite offen ist und einstückig mit einem Verdrängungskörper (12) verbunden ist, der auf der dem Basisteil (8) gegenüberliegenden Oberseite (12a) geschlossen ist.

21. Ventilkörpereinsatz (23) nach Anspruch 20, **dadurch gekennzeichnet, daß** der Basisteil (8) mindestens eine Rastnut (11) aufweist.

22. Ventilkörpereinsatz (23) nach Anspruch 21, **dadurch gekennzeichnet, daß** der Basisteil (8) des Ventilkörpers (6) mehrere, insbesondere zwei, übereinander angebrachte Rastnuten (11a, 11b) aufweist, die mit ein und derselben Verdickung (10) der Ventilsitz-Verlängerung (9) zur Erzielung der unterschiedlichen Rastpositionen zusammenarbeiten.

23. Ventilkörpereinsatz (23) nach einem der Ansprüche 20 bis 22, **dadurch gekennzeichnet, daß** der Basisteil (8) über einen Verbindungskörper (17) einstückig mit einem Basisteil (18) für mindestens einen schlauchförmigen weiteren, für ein Luftventil (4) vorgesehenen Ventilkörper (19) verbunden ist.

24. Ventilkörpereinsatz (23) nach den Ansprüchen 22 und 23, **dadurch gekennzeichnet, daß** der Verbindungskörper (17) Basisteile (18) für mehrere, insbesondere zwei, elastomere, schlauchförmige Luftventil-Ventilkörper (19a, 19b) bildet.

25. Ventilkörpereinsatz (23) nach Anspruch 23 oder 24, **dadurch gekennzeichnet, daß** vom Verbindungskörper (17) mindestens ein Griff (22) absteht.

26. Ventilkörpereinsatz (23) nach einem der Ansprüche 23 bis 25, **dadurch gekennzeichnet, daß** der Verbindungskörper (17) oder der Griff (22) mindestens ein Loch (24) aufweist.

27. Ventilkörpereinsatz (23) nach einem der Ansprüche 20 bis 26, **dadurch gekennzeichnet, daß** er aus Silikonkautschuk oder einem thermoplastischen Elastomer besteht.

28. Trinkbehälter (1), **dadurch gekennzeichnet, daß** er einen Behälteraufsatz (2) gemäß einem der Ansprüche 1 bis 19 aufweist.

## Claims

1. A container cap (2) for a drinking container (1), in particular a lid with a screw-type closing means and a drinking spout or nipple, comprising at least one one-way drinking valve (3) adjacent at least one drinking opening (25), a valve seat (5) extending substantially transversely to the main plane of the container cap (2), and a valve body (6) made of an elastomeric material which in its closing position abuts on the valve seat (5), **characterised in that** the valve body (6) comprises at least one sealing lip (7) extending from a base part (8) in the direction of the drinking opening (25), which sealing lip (7) is open towards the drinking opening (25) and is integrally connected to a displacement body (12) that projects into the drinking spout (13) of the container cap (2), leaving clear a passage channel (14).

2. A container cap (2) according to claim 1, **characterised in that** the valve seat (5) is circumferentially closed and that the sealing lip (7) has a tubular configuration and, in the closing position, abuts the valve seat (5) from within.

3. A container cap (2) according to claim 1 or 2, **characterised in that** the sealing lip (7) is integrally connected to a base part (8).

4. A container cap (2) according to claim 3, **characterised in that** the base part (8) of the valve body (6) is slippable, or slipped, respectively, onto a socket-like valve seat extension (9).

5. A container cap (2) according to claim 4, **characterised in that** the socket-like valve seat extension (9) has at least one, in particular end-side, thickening (10) or depression for snapping the base part (8) of the valve body (6) thereon.

6. A container cap (2) according to claim 5, **characterised in that** the base part (8) of the valve body (6) has at least one latching groove (11) corresponding to the thickening (10) of the valve seat extension (9).

7. A container cap (2) according to claim 6, **characterised in that** the base part (8) of the valve body (6) has several, in particular two, latching grooves (11a, 11b) arranged one above the other which cooperate with one and the same thickening (10) of the valve seat extension (9) to attain different latching positions.

8. A container cap (2) according to any one of claims 5 to 7, **characterised in that** the socket-like valve seat extension (9) has at least one longitudinal slot (15) for liquid to pass therethrough.

9. A container cap (2) according to claims 7 and 8, **characterised in that** at least one radial web (27) is provided in the more inwardly located latching groove (11b), the web being as high as this inner latching groove (lib) and fitting into at least one longitudinal slot (15) at the front side.

10. A container cap (2) according to claim 8 or 9, **characterised in that** each two longitudinal slots (15), or longitudinal channels aligned therewith, respectively, are interconnected via a peripherally extending depression (16) bordering on the valve seat (5).

11. A container cap (2) according to any one of claims 8 to 10, **characterised in that** the longitudinal slot (15) extends as far as to the site of the junction between the socket-like valve seat extension (9) and the main plane of the container cap (2).

12. A container cap (2) according to any one of claims 3 to 11, **characterised in that** the base part (8), via a connecting body (17), is connected in one piece to a base part (18) for at least one elastomeric, tubular valve body (19) of a further provided air valve (4), which is slipped onto a tubular valve seat (20) extending substantially transversely to the main plane of the container cap (2) in the region of at least one air entry opening (26).

13. A container cap (2) according to claim 12, **characterised in that** the connecting body (17) forms base parts (18a, 18b) for several, in particular two, elastomeric, tubular valve bodies (19a, 19b) of an air valve.

14. A container cap (2) according to claim 12 or 13, **characterised in that** the tubular valve seat (20) of the air valve is formed with at least one slot-shaped air passage (21).

15. A container cap (2) according to claim 14, **characterised in that** the slot length of the slot-shaped air passage is at least equal to half the height of the valve seat.

16. A container cap (2) according to any one of claims 12 to 15, **characterised in that** at least one handle (22) projects from the connecting body (17).

17. A container cap (2) according to any one of claims 12 to 16, **characterised in that** the connecting body (17) or the handle (22) has at least one hole (24).

18. A container cap (2) according to any one of claims 1 to 17, **characterised in that** the valve body (bodies) (6; 19) is (are) made of silicone caoutchouc or a thermoplastic elastomer.

19. A container cap (2) according to any one of claims 1 to 18, **characterised in that** it is a screw lid provided with a drinking spout (13).

20. A valve body insert (23), **characterised in that** at least one, in particular tubular, sealing lip (7) is integrally connected with a base part (8) that serves for fastening purposes, which sealing lip (7) is open on its side located opposite the base part (8) and is integrally connected to a displacement body (12), which displacement body (12) is closed on its upper side (12a) located opposite the base part (8).

21. A valve body insert (23) according to claim 20, **characterised in that** the base part (8) has at least one latching groove (11).

22. A valve body insert (23) according to claim 21, **characterised in that** the base part (8) of the valve body (6) has several, in particular two, latching grooves (11a, 11b) arranged one above the other and cooperating with one and the same thickening (10) of the valve seat extension (9) to attain the different latching positions.

23. A valve body insert (23) according to any one of claims 20 to 22, **characterised in that** the base part (8), via a connecting piece (17), is connected in one piece with a base part (18) for at least one tubular further valve body (19) provided for an air valve (4).

24. A valve body insert (23) according to claims 22 and 23, **characterised in that** the connecting body (17) forms base parts (18) for several, in particular two, elastomeric, tubular valve bodies (19a, 19b) for an air valve.

25. A valve body insert (23) according to claim 23 or 24, **characterised in that** at least one handle (22) projects from the connecting body (17).

26. A valve body insert (23) according to any one of claims 23 to 25, **characterised in that** the connecting body (17) or the handle (22) has at least one hole (24).

27. A valve body insert (23) according to any one of claims 20 to 26, **characterised in that** it is made of silicone caoutchouc or of a thermoplastic elastomer.

28. A drinking container (1), **characterised in that** it comprises a container cap (2) according to any one of claims 1 to 19.

## Revendications

1. Garniture de récipient (2) pour un récipient à boisson (1), en particulier couvercle avec fermeture vissée et bec ou paille pour boire, avec au moins une soupape anti-retour pour boire (3) en position adjacente à au moins une ouverture pour boire (25), avec un siège de soupape (5) qui s'étend essentiellement en direction transversale du plan principal de la garniture de récipient (2), et avec un corps de soupape (6) réalisé dans un matériau élastomère, qui prend appui dans la position fermée sur le siège de soupape (5), **caractérisée en ce que** le corps de soupape (6) comprend au moins une lèvre d'étanchéité (7) qui s'étend depuis une partie de base (8) dans la direction de l'ouverture pour boire (25), qui est ouverte dans la direction de l'ouverture pour boire (25) et qui est reliée d'une seule pièce avec un corps déplaceur (12) qui pénètre dans le bec pour boire (13) de la garniture de récipient (2) en libérant un canal de passage (14).

2. Garniture de récipient (2) selon la revendication 1, **caractérisée en ce que** le siège de soupape (5) est réalisé de façon fermée dans lui-même et **en ce que** la lèvre d'étanchéité (7) est réalisée à la manière d'un tuyau et prend appui depuis l'intérieur contre le siège de soupape (5) dans la position fermée.

3. Garniture de récipient (2) selon l'une des revendications 1 ou 2, **caractérisée en ce que** la lèvre d'étanchéité (7) est reliée d'une seule pièce avec une partie de base (8).

4. Garniture de récipient (2) selon la revendication 3, **caractérisée en ce que** la partie de base (8) du corps de soupape (6) peut être emboîtée ou est emboîtée sur un prolongement en forme de buse (9) du siège de soupape.

5. Garniture de récipient (2) selon la revendication 4, **caractérisée en ce que** le prolongement en forme de buse (9) du siège de soupape présente au moins un épaississement (10) ou un enfoncement, en particulier du côté de son extrémité, pour verrouiller la partie de base (8) du corps de soupape (6).

6. Garniture de récipient (2) selon la revendication 5, **caractérisée en ce que** la partie de base (8) du corps de soupape (6) présente au moins une rainure d'arrêt (11) en correspondance avec l'épaississemen (10) du prolongement (9) du siège de soupape.

7. Garniture de récipient (2) selon la revendication 6, **caractérisée en ce que** la partie de base (8) du corps de soupape (6) comprend plusieurs, en particulier deux, rainures d'arrêt agencées l'une sur l'autre (11a, 11b) qui coopèrent avec un seul et même épaississement (10) du prolongement (9) du siège de soupape pour réaliser différentes positions d'arrêt.

8. Garniture de récipient (2) selon l'une des revendications 5 à 7, **caractérisée en ce que** le prolongement en forme de buse (9) du siège de soupape est muni d'au moins une fente longitudinale (15) pour le passage de liquide.

9. Garniture de récipient (2) selon l'une des revendications 7 ou 8, **caractérisée en ce qu'**au moins une tige radiale (27) est logée dans la rainure d'arrêt située la plus à l'intérieur (11b), laquelle est aussi haute que cette rainure d'arrêt intérieure (11b) et s'adapte dans au moins une fente longitudinale (15) du côté avant.

10. Garniture de récipient (2) selon l'une des revendications 8 ou 9, **caractérisée en ce que** deux fentes longitudinales (15) ou canaux longitudinaux ainsi orientés sont reliés entre eux par le biais d'un enfoncement (16) qui s'étend dans la direction de la périphérie et est adjacent au siège de soupape (5).

11. Garniture de récipient (2) selon l'une des revendications 8 à 10, **caractérisée en ce que** la fente longitudinale (15) s'étend jusqu'au point d'intersection entre le prolongement en forme de buse (9) du siège de soupape et le niveau principal de la garniture de récipient (2).

12. Garniture de récipient (2) selon l'une des revendications 3 à 11, **caractérisée en ce que** la partie de base (8) est reliée d'une seule pièce par le biais d'un corps de jonction (17) avec une partie de base (18) pour au moins un corps de soupape élastomère en forme de tuyau (19) d'une autre soupape d'aération prévue (4), qui est monté sur un siège de soupape en forme de conduite (20), qui s'étend essentiellement en direction transversale du plan principal de la garniture de récipient (2) dans la zone d'au moins une ouverture d'entrée d'air (26).

13. Garniture de récipient (2) selon la revendication 12, **caractérisée en ce que** le corps de jonction (17) forme des parties de base (18a, 18b) pour plusieurs, en particulier deux, corps élastomères de soupape pour soupape d'aération, en forme de tuyaux (19a, 19b).

14. Garniture de récipient (2) selon l'une des revendications 12 ou 13, **caractérisée en ce que** le siège de soupape pour soupape d'aération en forme de conduite (20) est réalisé avec au moins un passage d'air en forme de fente (21).

15. Garniture de récipient (2) selon la revendication 14, **caractérisée en ce que** la longueur de fente du passage d'air en forme de fente est au moins égale à la moitié de la hauteur du siège de soupape.

16. Garniture de récipient (2) selon l'une des revendications 12 à 15, **caractérisée en ce qu'**au moins un moyen de prise (22) se détache du corps de jonction (17).

17. Garniture de récipient (2) selon l'une des revendications 12 à 16, **caractérisée en ce que** le corps de jonction (17) ou le moyen de prise (22) présente au moins un trou (24).

18. Garniture de récipient (2) selon l'une des revendications 1 à 17, **caractérisée en ce que** le ou les corps de soupape (6 ; 19) est réalisé ou sont réalisés en caoutchouc silicone ou en un élastomère thermoplastique.

19. Garniture de récipient (2) selon l'une des revendications 1 à 18, **caractérisée en ce qu'**elle est un couvercle à fermeture vissée avec bec pour boire (13).

20. Insert de corps de soupape (23), **caractérisé en ce qu'**au moins une lèvre d'étanchéité (7), en particulier en forme de tuyau, est reliée d'une seule pièce avec une partie de base (8) servant à la fixation, la lèvre d'étanchéité (7) étant ouverte sur le côté en opposition à la partie de base (8) et étant reliée d'une seule pièce avec un corps déplaceur (12) qui est fermé sur le côté supérieur (12a) en opposition à la partie de base (8).

21. Insert de corps de soupape (23) selon la revendication 20, **caractérisé en ce que** la partie de base (8) comprend au moins une rainure d'arrêt (11).

22. Insert de corps de soupape (23) selon la revendication 21, **caractérisé en ce que** la partie de base (8) du corps de soupape (6) comprend plusieurs, en particulier deux, rainures d'arrêt agencées l'une sur l'autre (11a, 11b) qui coopèrent avec un seul et même épaississement (10) du prolongement (9) du siège de soupape pour réaliser les différentes positions d'arrêt.

23. Insert de corps de soupape (23) selon l'une des revendications 20 à 22, **caractérisé en ce que** la partie de base (8) est reliée d'une seule pièce par le biais d'un corps de jonction (17) avec une partie de base (18) pour au moins un autre corps de soupape en forme de tuyau (19) prévu pour une soupape d'aération (4).

24. Insert de corps de soupape (23) selon les revendications 22 et 23, **caractérisé en ce que** le corps de jonction (17) forme des parties de base (18) pour plusieurs, en particulier deux, corps de soupape pour soupape d'aération élastomères en forme de tuyau (19a, 19b).

25. Insert de corps de soupape (23) selon l'une des revendications 23 ou 24, **caractérisé en ce qu'**au moins un moyen de prise (22) se détache du corps de jonction (17).

26. Insert de corps de soupape (23) selon l'une des revendications 23 à 25, **caractérisé en ce que** le corps de jonction (17) ou le moyen de prise (22) comprend au moins un trou (24).

27. Insert de corps de soupape (23) selon l'une des revendications 20 à 26, **caractérisé en ce qu'**il est réalisé en caoutchouc silicone ou en un élastomère thermoplastique.

28. Récipient à boisson (1), **caractérisé en ce qu'**il comprend une garniture de récipient (2) selon l'une des revendications 1 à 19.
